# EUROPEAN PATENT SPECIFICATION

(11) **EP 3 523 158 B1**
(45) Date of publication and mention of the grant of the patent: **12.02.2025**
(21) Application number: 16918462.9
(22) Date of filing: 18.12.2016
(51) Int. Cl.: B60N 2/26, B60N 2/30, G08B 21/22, B60N 2/01

(54) **INTEGRATED CHILD SAFETY SEAT**
INTEGRIERTER KINDERSICHERHEITSSITZ
SIÈGE DE SÉCURITÉ POUR ENFANT INTÉGRÉ

(30) Priority: 07.10.2016 US 201615289048
(43) Date of publication of application: 14.08.2019
(73) Proprietor: DALI, L.L.C., North Miami FL 33179 (US)
(72) Inventor: SCHONFELD, Lizbeth, North Miami Beach, FL 33179 (US); SCHONFELD, David, North Miami Beach, FL 33179 (US)
(74) Representative: Tomkinson, Alexandra
(86) International application number: PCT/US2016/067411
(87) International publication number: WO 2018/067190

(56) References cited:
- EP-A1- 1 908 626
- EP-A1- 2 599 660
- EP-A2- 2 028 035
- WO-A1-2015/076764
- DE-A1- 102005 062 324
- US-A- 5 260 684
- US-A- 6 120 093
- US-B1- 9 403 437

## Description

### II. FIELD OF THE INVENTION

The present invention relates to an integrated infant or child safety vehicle seat completely and seamlessly inserted as part of the upholstery of a car seat, separated, or unified with other seats, for infants or children from zero to eight years old and above, with an ergonomic design, in different positions and inclinations, with a concave shaped seat, with head/foot rests that incline and arm rests that raise electronically to different positions, who are travelling in a vehicle, and more particularly, to an infant or child safety car seat with all the security control features intertwined with one another integrated into the seat and reflected and controlled in the dashboard.

### III. OTHER RELATED APPLICATIONS

The present application relates to U.S. Patent Application No. 15/289,048 filed on 7 October 2016 titled "Integrated Child Safety Seat".

### IV. DESCRIPTION OF THE RELATED ART

Several designs for infant safety seats used in vehicles have been designed in the past. None of them, however, includes a seat or seats for an infant or child since the time he is born, until the ages of 6 to 8 years old and above in the rear seat of a vehicle that is permanently a part of the vehicle's seat, with rear-facing and forward facing position integrated seat, with no external attachments, with all the mechanisms invisible inside the internal parts of the car seat, and includes safety integrated features to ensure that the infant or child is travelling with the utmost protection as well as to prevent unbuckled infants or children or infant/child-left-in-car injuries and a monitoring system that allows a driver to focus attention forward on the road and also to view the infant or child without turning around.

WO2015/076764 discloses a forward or backwards facing child safety seat which is integrated into a car seat. A wheel and slide is provided in the seat to provide forwards and backwards motion of the same as well as allowing the seat to be used as an armrest. US6120093 discloses a child car seat that is secured to a lower transverse beam of a vehicle located on the floor of the vehicle and to an upper transverse beam of a vehicle disposed on the roof of the vehicle.

DE102005062324 discloses vehicle seating comprising a first row of seats and a second row of seats. A center rail extends between the first and second rows of seats. A front section of the center rail is for a child seat which is arranged against the driving direction of the vehicle.

EP1908626 discloses an aircraft seat with a seat surface and a seat back. The seat has a reboard seat bracket which is pivotally mounted in the lower region of the backrest. At least part of the cushion of the backrest is connected to the reboard seat frame and pivotable with the seat frame. This part of the cushion can be used as a child seat. US5260684 discloses a child warning system for use in an integrated or portable child restraining seat. The system includes an occupancy indicator, an emergency signal and warning indicators. A sensor is provided in the seating portion of the seat to detect whether a child is present in the seat.

Applicant believes that the closest reference corresponds to U.S. patent No. 4,756,573 issued to Simin. However, it differs from the present invention because while the Simin device is partially integrated with the vehicle, the infant carrier is similar to most baby car seats in use today and it is located externally on top or above a platform of the automobile front seat next to the driver, facing backwards, needing an attended to look after the infant from the back seat.

In contrast, the integrated infant or child safety seat of the present disclosure includes, among other features, a seat for an infant or child permanently formed into the rear seat of a vehicle allowing a sturdier construction and absolute assimilation into the upholstery and aesthetic of the vehicle it was specifically adapted for, united, or as a separate unit, between or next to the other seats. Other safety features allow the driver to more securely monitor the infant and to prevent accidental injury from leaving an infant unattended, unbuckled or alone in a vehicle. Other similar patents have detached parts, or are removable seats without the technology and features as well as the security elements of the present art. In some cases some arts of detached seats facing backwards to the driver have an additional pole to secure the baby seat to the base of the car to try to avoid movement of detached seat, as well as a platform for the base of the detached car seat. The art in this patent avoids having to install these accessories, because the Integrated Infant or Child Safety Car Seat is part of the car itself, therefore the infant or child secured to it is incorporated into a much stable and safer system.

Another difference with the Simin art is that they have seats incorporated in the back seat but only for infants from 6 to 8 years old. Our art portrays an integrated car seat built in for an infant or child since the time he is a new born with 2 Positions for different growing stages of the infant or child, inclination of seats and head/foot rests separately, arm rests that rise, and inserts that elevate ensuring all his safety with electronic, digital or other security features that work intertwined installed as part of the Integrated Infant or Child Safety Car Seat when the car is built.

The present design replaces the need to purchase detached seats for the different growing stages of the infant.

The integrated infant or child safety seat is ideal for the consumers that are starting a family or have children and feel the necessity of providing the highest safety and comfort to the children at every stage of their development while traveling in cars. It is designed to serve the needs and the safety of children in cars.

The integrated infant or child safety seat is ideal for large vans or SUV's although the design also serves smaller vehicles ensuring the safety of all infants or children. This art will serve the market with advanced technological and novel improvements with a vision of present and future needs.

The difference of the other arts regarding the safety control features of the Integrated Infant or Child Safety Car Seat is that all the controls are intertwined with one another and are an internal part of the seat. The safety control features are portrayed all together in a screen in the dashboard covering all the possible situations in order to ensure the safety of an infant or child in a vehicle. It beholds possibility of un-buclding an infant or child from the integrated infant or child safety car seat by a remote control in the display of the dashboard to facilitate the process by following the safety sequence of the controls before leaving the vehicle and not leaving an infant or child alone in a car. Other patents describing the closest subject matter provide for a number of more or less complicated safety control features that fail to solve the problem in an efficient and economical way. None of these patents suggest the novel features of the present invention that integrates all the control systems together and incorporated into the car internally.

Most importantly, the infant or child will travel more safely when placed directly to a seat designed for his needs as part of the car seat and buckled securely, instead of being buckled to a seat that also requires buckling itself to the actual seat of the car which is more unstable, wiggly and unsafe, especially at the moment of an abrupt use of the brakes, or in a collision or accident.

The integrated infant or child safety car seat provides the assurance that the infant or child present in vehicles are completely safe, monitored and protected, by the ergonomic design of the art enhanced by all the security features it beholds.

### V SUMMARY OF THE INVENTION

It is one of the main objects of the present invention to provide an infant or child car safety seat with an ergonomic design that seamlessly meshes with the interior decor and upholstery of the vehicle into which it is installed.

It is another object of this invention to provide a safer infant or child car seat by integrating the infant or child seat into the structure of the vehicle seat instead of using sometimes difficult to use and unreliable seat belts, latches, tethers, or other strap-in systems for detached car seat units.

It is another object of this invention to provide an integrated infant or child seat with 2 Positions, rear facing and forward facing, with several degrees of inclinations positions for the seat and back, head/footrests, and arm rests that rise, all controlled electronically, with a concave shaped seat within an ergonomic concept.

It is still another object of the present invention to provide an integrated infant or child safety car seat that includes factory-installed monitoring features to prevent the occurrence of injury risks to the infant or child. These features contemplate a series of controls put together with a system that covers all the possibilities to ensure maximum safety.

It is yet another object of this invention to provide such a device that is inexpensive to manufacture and maintain while retaining its effectiveness.

Further objects of the invention will be brought out in the following part of the specification, wherein detailed description is for the purpose of fully disclosing the invention without placing limitations thereon.

According to the present invention there is provided an integrated infant or child safety vehicle seat built into a vehicle, in a bench in a vehicle; or as a separate unit between or next to other seats in a vehicle according to claim 1.

### VI. BRIEF DESCRIPTION OF THE DRAWINGS

With the above and other related objects in view, the invention consists in the details of construction and combination of parts as will be more fully understood from the following description, when read in conjunction with the accompanying drawings in which:
Figure 1 shows a perspective view of a forward facing position in an integrated infant or child safety car seat.
Figure 2 shows a perspective view of a rear facing position in an integrated infant or child safety car seat.
Figure 3 shows a perspective view of a vehicle dashboard demonstrating safety features in an integrated infant or child safety car seat.
Figure 4 shows all the security control elements in the dashboard of an integrated infant or child safety car seat.
Figure 5 shows a perspective view of an integrated infant or child safety seat additional elements, such as padding, and elevating inserts.
Figure 6 shows a perspective view of a top rearward view of an integrated infant or child safety car seat with an elevated seat inclination.
Figure 7 shows a plan view of a top and backward part of an integrated infant or child safety car seat when a newborn infant is placed in it, with canopy.
Figure 8 shows a side view of the concave shaped seat with different inclinations of the seat and back, as well as the head/foot rests of the integrated car seat, that recline electronically or not.
Figure 9 shows a side view of the arm-rests on the sides of the seat and back rests, that raise from below electronically to different positions in the Integrated Infant or Child Safety Car Seat.
Figure 10 shows a plan view of the head/footrests rounded protruding edge protection of the Integrated Infant or Child Safety Car Seat.
Figure 11 shows a plan view of a head- rest of a version of the device.

### VII. DETAILED DESCRIPTION OF THE PREFERRED EMBODIMENT

The subject device and method of use is sometimes referred to as the device, the invention, the car seat, the safety seat, the integrated infant safety car seat, the child integrated safety car seat, the art, or other similar terms. These terms may be used interchangeably as context requires and from use the intent becomes apparent. The masculine can sometimes refer to the feminine and neuter and vice versa. The plural may include the singular and singular the plural as appropriate from a fair and reasonable interpretation in the situation.

Referring now to the drawings, where the present invention is generally referred to with numeral 10, it can be observed that it basically includes, among claimed and contextual elements, a back 12, a seat 14, a seatbelt 16, a seatbelt 18, a door 20, a harness 22, a hasp 46, a harness 25, a hasp 32, a harness adjuster 66, an arm-rest 23, an arm rest 43, a back 24, a seat 26, a head/foot rest 28, a head/foot rest 29, a head/foot rest 47, a head/foot 57, a newborn head-rest 88, a button 31, a button 41, a button 39, a button 8, a button 7, a button 17, a button 39,a button 37, an arm-rest button 9, an arm-rest button 11, a scale 30, a back of head rest 34, a camera 35, a bench 36, a headrest 38, a back 40, a camera 42, a seat 44, a lap-belts 27, a hinge 33, a canopy 67, a head-rest for new-born 87, an insert 74, an insert 76, a padding 78, a padding 74, a screen 52, a rear-view child mirror 50 , a display 49, an Infant in Car button 51, an Infant in Seat sign 53, an Infant in Seat sign 55, an Un-Buckled button 59, alarms and alerts for 51, 53, 55, a manual key device 61.

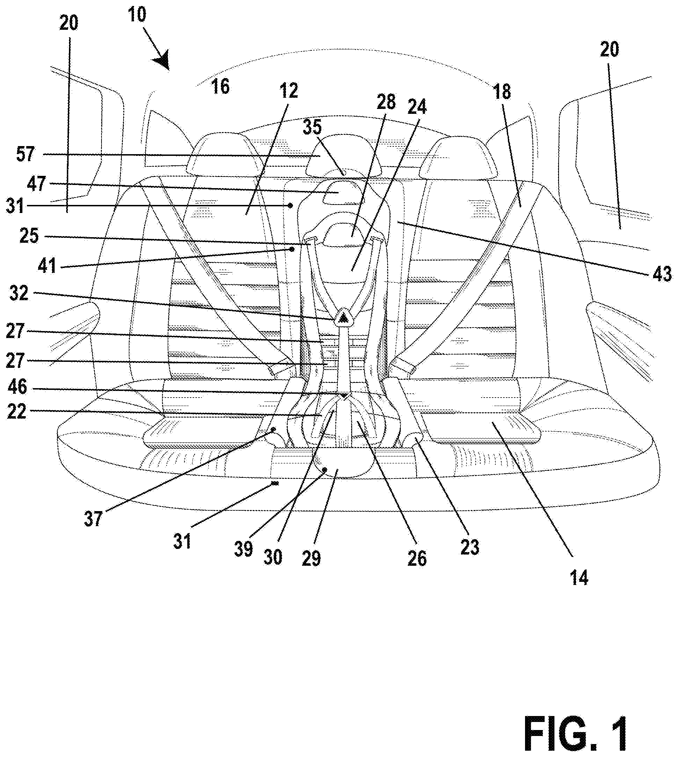

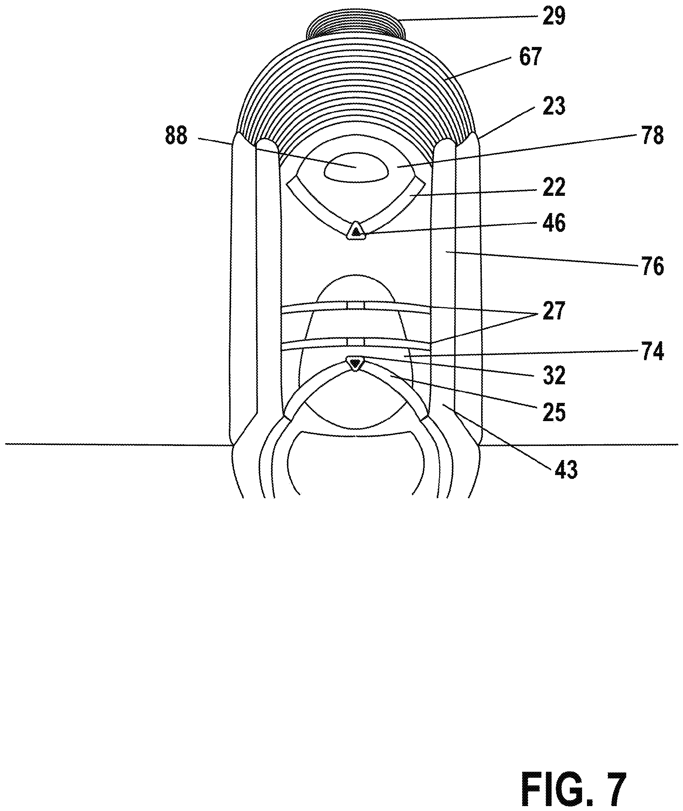

There are two positions to sit the infant in the Integrated Safety Seat:
Position 1: When the infant or child is seated with his head in the lower area of the seat, and lower part the bench, or his head laying in head/foot rest 29, facing the opposite direction of the driver or back-wards, when he is a small infant, from zero to two years old or below the mandatory weight established by the AAP (American Association of Pediatrics), and up to 2 and 4 years old. With the concave shaped seat of the present art, the back rest 24 first section can incline downward for the body of a growing child to fit, having space to extend his legs.
Position 1: Head of Infant or child on head/footrest 29. Or in new-born head rest 88.
Position 2: When the infant or child is seated with his head in the upper area of the seat, or head rests 28, 47 or 57, facing the same direction of the driver or frontwards, when he is a bigger child, from 2 years old and or above the mandatory weight established by the AAP, and 4, 6, 8, years old and above.
Position 2: Head of Infant or child on head/footrest 28, 47 or 57, and 88 for a newborn. Figure 1 is an example of how a front facing integrated infant or child safety seat may be positioned in the back seat area of a passenger vehicle, with absolute assimilation to the upholstery with the other seats, or as a separate unit between or next to the other seats. As in many vehicles the rear seat includes a back 12 and a seat 14 that spans the width of the vehicle. A door 20 is shown for context. The integrated safety car seat is positioned on a middle third of the back 12 and seat 14 bounded by the left third and right third of the seat. There is a placement of newborns until 6 months as shown in Figure 7, and progressively as the infant grows, the seat is adapted to his size by padding and inserts that are part of the upholstery as shown in Figure 1, Figure 2, Figure 6. The child safety seat could also be adapted to be positioned on the center third, left third or right third, or as a separate unit between them. There could be seats for older infants or children directly integrated of the same art, as an upgrade ordered when purchasing a vehicle.

The left third and right third of the rear bench seat are engineered for an adult to comfortably sit, or as expressed above, or for other integrated infant or child car seats, or for integrated safety car seats for older infants, which could be ordered as upgrades. A seatbelt 16 is provided for the right third. A seatbelt 18 is provided for the left, driver's side, rear seat position.

An important aspect of the invention is the seat integrated into the upholstery and structure of the back 12 and seat 14 between the left and right third adult seats. The seat 26 of the child seat is structured below the surrounding seat 14 and the back 24 is structured inset into the back 12. Equally, there may be one, two or three child safety seats across the rear car seat so that multiple children can be simultaneously transported or if the vehicle owner prefers to have child safety seats in any of the right, center or left positions, and even in a third row of the vehicle for multiple children.

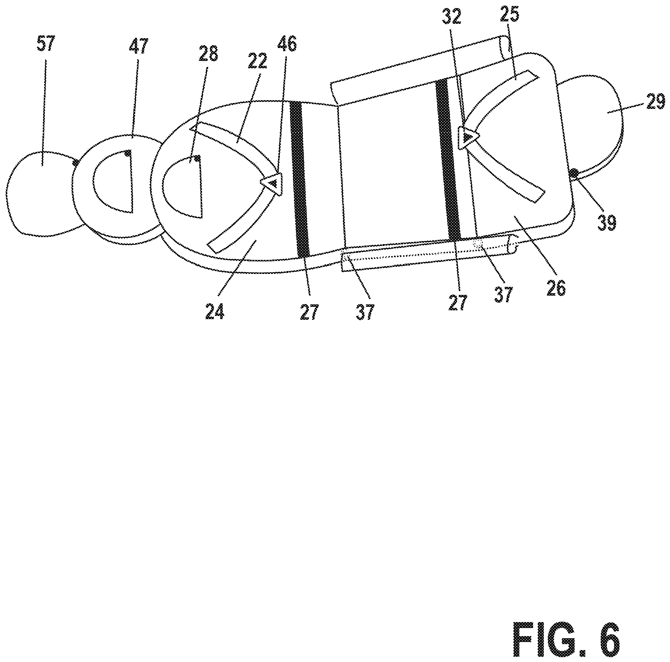

When an infant is born, he is placed in Position 1, rear facing, in the base of the Seat, with some inclination in his upper body (30 degrees) in head rest 88, and with the corresponding harness and lap- belt. As an infant grows older from being a new-born (Figure 7) to a toddler - zero to 2 years old, in Position 1 (Figure 6) and then to becoming a child of 4 years old, he uses the head rest 29. The seat in Position 1, has semi-recumbent inclinations with standard recommended positions: 30, 40 or 45 degrees. With concave shaped seat, the lower section of the back-rest 24 fully inclines for a child from 2 to 4 years to extend his lower extremities, in the rear facing position. As he grows older, the seat changes to Position 2, in which the child is placed onto the seat 26 and rests his back onto the back 24, with semi-recumbent inclinations 30, 45 and 60 degrees. The child's head can rest between the headrests 28, 47 and 57 for ages 4, 6 ,8 or above. The head/footrests 88 (newborns - Position 1) and 29 Position 1, as well as head/footrests 28,47 and 57 (Position 2), when not in use, are inserted inwardly and seamlessly into the upholstery, and are covered by the padding. The head/ footrest 29 when not in use, lays downward in 90 degrees. The harness for newborns, zero to 6 months, and harness from 6 months to 2 years old, and 2 years old to 4 years old in the Position 1, as well as harness from 2 years old to 4 years old, and 4 to 6, and 6 to 8 years old and above in Position 2, are kept seamlessly under the inserts and padding as well when not in use. All harnesses are represented by the numbers 22 and 25, with hasps 46 and 32, and adjusters 66.

The same integrated infant safety car seat adapts to the age and size of an infant or child by providing rear and front Positions (1 and 2), with inclination degrees, in which the child is secured with harnesses, lap-belts, designated head/footrests, that incline accordingly as well as arm rests that raise, inserts that elevate from the upholstery all integrated and complemented by security control features.

Different levels of inclination of the seat, as well as the head/footrests, give an array of angles to enable comfort and the proper positioning of the infant. Inserts and Padding are provided as part of the design to make the seat. They elevate manually or electronically with the same technology as the arm-rests, to 5 or 10 inches high approximately, and are part of the upholstery.

When the infant is zero to two years old, or is below the mandatory weight, he will be placed on the lower extreme of the infant car seat facing opposite the driver. (Position Infant 1).

The reclined head/footrest will move forward with an automatic button 39 as well as at least one third of the lower part of the seat that moves with button 37 placed on the arm - rest 23 to raise upward in three higher positions, (30 for a small infant, 40 for a 2 year old child and 45 degrees for a 4 year old child). This is consistent with the mandatory regulations. The head/footrests that nestle the neck and head of the infant or child are rounded with a protruding edge of about 10 inches with a soft material to protect the neck and skull of the child. The upper body of the baby is raised by inclinations of seat and head/footrests. There are side elevations which are arm-rests on both sides of the child all along the integrated infant or child safety car seat, tall enough to provide a barrier or separation wall to give him body protection. The height of these arm-rests or separation side walls of the integrated infant or child safety car seat design may vary, and they can elevate to 12.7cm (5 inches), 25.4 cm (10 inches) and 38.1cm (15 inches) approx. The arm-rests both on the seat 26 and back rest 24 - raise electronically from below to these three different positions.

There are seat belts and buckling harness systems all along the integrated infant or child safety car seat. Some begin on both extremes of the seat, and some begin on the sides. The harnesses of these systems also have cameras connected to each of their hasps facing the infant according to the position. The three point harnesses part from the extremes of each position. (Position Infant 1: Harness 22, Hasp 46), (Position Infant 2: Harness 25, Hasp 32). There are additional harnesses for a newborn in Position 1 and for an older child in Position 2., with the same numbers for all. When using either of them according to the position of the infant, the alternative ones will be covered with the inserts and padding. The inserts to provide a smaller barrier to the child may elevate from the seat as the arm-rests, electronically.

The Lap Belts 27 part from the sides of each Position 1 and 2. The Position 1 opposite to driver is designed in the integrated infant safety car seat to abide by the law to protect the spine of the infants zero to two years old or below the mandatory weight in the event of a car collision or accident. It is recommended that a child should remain in a rear-facing position until he is 4 years old. This is possible to be done in the present art. With a concave shaped seat, a child from 2 to 4 years old extends his legs, when the lower section of the back-rest 24 is fully reclined with inclination button 41.

Two safety Harnesses 22 (position 1) and 25 (position 2) are provided to secure the infant or child in the integrated infant or child safety seat on both extremes when he sits on either position. Additionally, there are other harnesses of the same kind for different sizes and ages of the child, which we refer to with the same numbers. The harnesses have Cameras which we name 35 for all cameras to view the infants face and body when sitting on either position reflected on the dashboard. This is effective to control the child to be seated properly to avoid injuries in a collision as well as for the general purpose of keeping the infant from unwanted movement about the vehicle during driving. A hasp 46 (position 1 and a hasp 32 (position 2) are provided to allow easy and effective entry and exit into the harness 22 (Position 1) and harness 25 (Position 2) restraint systems. Other hasps are present in additional harnesses.

As part of the electronic, digital or other safety features, a scale 30 is supplied internally into to seat as part of a safety system in the Integrated infant or child safety Car Seat to avoid infant left un-buckled while car is in motion, as well as infants left in unattended vehicles. If a pre-determined weight is detected by the scale 30, which has sensors all along the seat of the Integrated Infant or Child Safety Car Seat, then the monitoring system is on alert and awaiting additional signals to avoid these risks. The weight needed to activate the scale may be estimated to be that of the infant plus any gear the infant is likely to have. It is generally more than a few pounds. When adjusting it may be better to err on the lighter side and risk a false alert of an infant improperly left in the vehicle than to not trigger and risk human injury.

The cameras named 35 for all of them, are located on or near the armrest or in the surface of the headrests of the opposite extreme of the seat so that the child's face is seen when rear facing or forward facing. The cameras 35 are also integrated into the hasp 46 and the hasp 32 and other additional hasps to cover any of the two directions the infant is facing. The images of the cameras are reflected internally in a screen on the dashboard of the vehicle to be viewed by the driver.

The integrated infant or child safety car seat provides the feature of different inclinations of the seat, on back 24 and seat 26. These numbers refer to the area for the back of a person sitting in a regular car seat 24 also called back, and the area for lower body of a person when sitting in a regular car seat, also called seat. In an Integrated Infant or Child Safety Car Seat, 24 and 26 serve as back placement and lower body placing alternatively according to the position of the infant or child (Position 1 or Position 2).

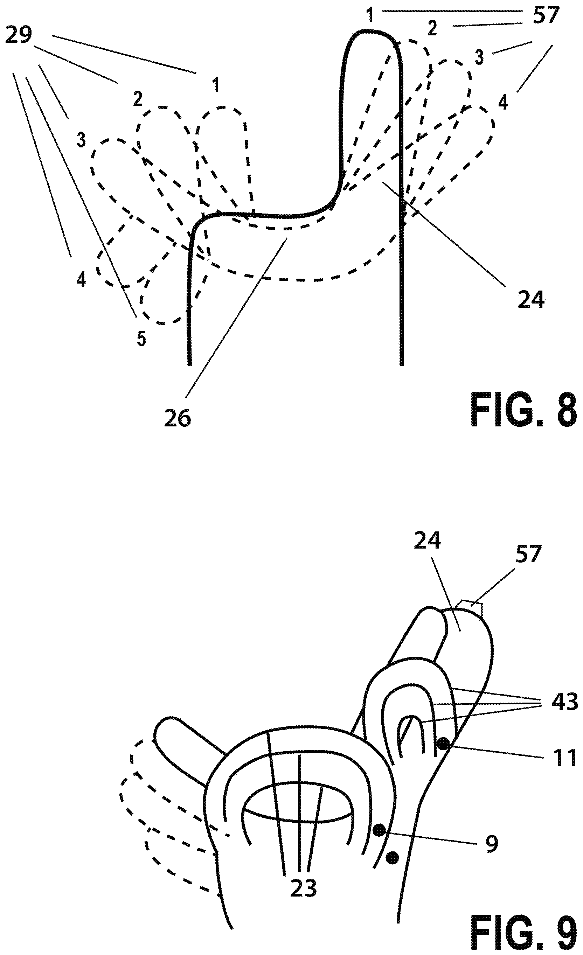

Button 37 will be located in one or both sides of the arm-rest 23 and will control the inclination of 26 being 26 the persons' sitting area or seat of a regular car seat. For Back 24, Button 41 will be located in one or both sides of the arm rests 43 and will control the inclination of the lower part of back 24, as well as Button 31 will be located in one or both sides of the arm- rests 43 and will control the inclination of the end upper part of 24 (being 24 the persons' back area of a regular car seat). This way the seat has one inclination button, and back has two inclination buttons. This button 31 will give an additional position of inclination on the upper part of the seat to provide more angles for a grown infants' upper body, when sitting in position 2. Button 41 will provide a low level of inclination for the extremities of a child 2 or 4 years old, sitting in Position 1. The Buttons 37, and buttons 41 and 31 are found in the middle and upper extremes of the arm rests (on one or both arm rests on the sides of the infant or child, that electronically or any other technological way, control the recline of the Integrated Infant or Child Safety Car Seat. In the example in figure 1 the button 37 is on a forward edge of the seat 26 but it could be located in any place convenient for the driver including remotely. The Button 31, 41, and 37 may be a rocker switch (similar to the type used in many powered windows). All these buttons will have hinges, seamless and internal, such as hinge 33 visible or not, to move the mechanisms of inclination, by any existent technology, such as in reclining chairs or mattresses available in the market. There will be internal hinges or devices that will correspond to all the inclination control buttons and will move accordingly to the buttons pressed or manipulated with any technology, manual, electronic, digital or other. The internal mechanism of inclination that responds to the buttons will provide many different angles in all the parts of the integrated infant or child safety car seat, with smooth movement, to provide adaptability and comfort for all the needs of the infant, in Position 1 and Position 2, as the infant grows in Position 1 from zero to 6 months, from 6 months to 2 years old, from 2 to 4 years old, and in Position 2 from 2 to 4 years old, from 4 to 6 years old, from 6 to 8 years old. (Figure 8). These seat inclinations can also be adjusted in a remote control, together with the head/footrest inclinations and the arm rests elevation.

To control the inclination of the Head/Footrests, which is head/footrests 29 when an infants' or childs' head is in Position 1, in seat 26, that is the lower position of a regular car seat, the head/foot rest will have button 39. This head/foorest 29 will move in different angles (30, 40, 45 degrees) or different degrees such as (35, 45, 50) to provide more comfort to the head, including a 90 degrees angle downwards for when it is not in use. There is also a head/footrest control button for Head-Rest 88 of newborn babies.

For the inclination of the three Head/Foot/Rests which are 28, 47 and 57, when the infant's or child's head is in Position 2, in back 24, which serve different accommodations for the head or feet of growing i according to the position 1 or 2 of placement, Button 8 will control the inclination for head/foot rest 28. Button 17 will control the inclination of head/footrest 47. Button 7 will control the inclination of head/footrest 57. This may vary in terms of number of head- foot rests and buttons assigned for the inclination feature. The head/footrest 57, at the extreme of the back seat 26 will have the same inclinations as the upper section of the seat (for example 30,45 or 60 degrees, or different ones such as (25, 40, 55), as an example, to provide more comfort. The internal head-foot rests 28, 47, and also 88 are inserted into the upholstery and elevate with buttons 8, 17 and a button for head-rest 88, or may by pulled and pushed outward when in use and inward when not in use manually or electronically with these buttons.

The inclinations of the back or the seat controlled by the buttons will provide reclined seat positions of 30, 40 or 45 degrees Approx. for Position 1, and reclined back rests positions of 40, 60, 80 degrees Approx. for Position 2.

The inclination of the head/footrests provide standard indicated reclined positions of 35, 45 or 50 degrees, for Position 1, and the same inclinations for Position 2. These inclination alternatives adjust to the anatomy of the infant or child. In this way, Head - Rest 29 together with Foot-Rest 28, 47 and 57 and its inclinations accommodate an infant or child from Zero to 4 years old. Head rest 88 remains reserved for newborns. At the same time, head rests 28, 47 and 57 together with Footrest 29 and its inclinations accommodate an infant or child from 2 to 4, 4 to 6 and 6 to 8 years old. These head-foot / rests may have their own angle of inclination, different from the seat or back. The inclination mechanisms could have visible buttons, knobs, hinges, electronic or digital or any other technology, and be completely seamless or not, such as inclined mattresses, airplane seats, massage chairs, and others, on the market. The controls may also be in a separate control device in the hands of the driver or care giver to control from the front seat. All of these inclination features of the seat, back-rest, and head/ footrest, including the arm-rests, can also be adjusted by a remote control.

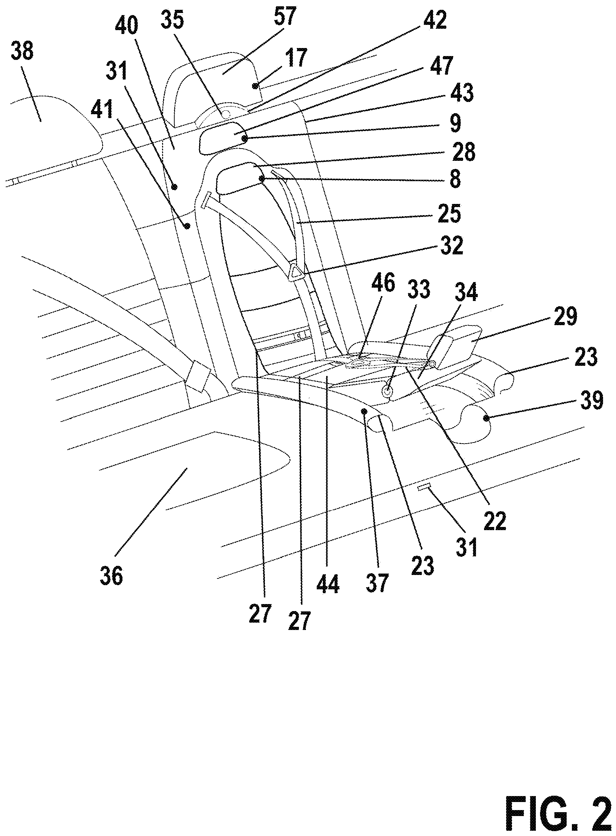

Figure 2 is an example of a rear facing integrated safety seat. (Position 1). In many situations, particularly for smaller children and infants, a rear facing seat is safer and is mandatory. Similar in inventive concept, the same seat is seamless, and automatically elevates to upward positions with a button. Buttons 37 for bench 26 and buttons 41, 31 for back 24, located in arm-rests 23 and 43 respectively. It includes head/footrests (29, 28, 47, 57 and 88 for newborns), The head/footrests 29 and 57 also elevate with the seat or independently to different angles by moving the buttons 39 and 7. The internal head-foot/rests 29 47, and 88 for newborns are inserted into the upholstery and elevate with buttons 39, 17 and a button for 88. There is side protection provided by arm rests on both sides 23, 43. On both extremes there are buckling harness systems 22, 25, and on both sides there are lap-belts, named 27 for all. There is a lap-belt for every set of 3 point harness in the Integrated Infant or Child Safety Car Seat. There may be additional harnesses and lap-belts of the same type for different sizes and ages of the occupant. The position 1 is opposite to the driver to abide by the law to protect the spine of infants zero to two years old or below the mandatory weight established by the governing regulatory bodies, in the event of a car collision. With the concave shaped seat, the lower section of the back 24 fully inclines with button 41 for a child from 2 to 4 years to extend his lower extremities, in the rear facing position. All the parts and buttons of the Integrated Infant or Child Safety Car Seat work together to adjust to the needs of the infant or child while travelling in vehicle since he is a newborn up to age 8 (Approx.).

In the Integrated Infant or Child safety Car Seat the buttons to incline the seats may be different than the buttons to incline the head/foot-rests. The reason is to provide many more options to comply with the infants' absolute safety and comfort, proper positioning and needs, such as sleeping, drinking from a bottle, or keeping his upper body in a semi-recumbent manner, abiding by the regulations. This ergonomic art in which the child is placed in an integrated safety seat is a novel concept for the industry. The head/foot rests at the extremes are extensions of the seat and back of the seat, making the seat longer, when we refer to head/foot rests 29 and 57, which means they are a prominent structure that serves as additional space to fit the infant or child in both Positions 1 and 2. Each of these two head/foot-rests may measure approximately 10 inches in length, which provides enough space for the head and neck of an infant or child, or the feet accordingly. The head/foot-rests have a rounded shape and a soft texture inside with a protruding protection of approx. 7 inches or more.

In a front impact in Position 1 the child is pressed into the seat 26 uniformly to reduce injury from the collision. As with other variations of the device, if the seat 26 is slightly below the surface of the surrounding seat 36 then some side impact protection is also afforded. The shape of the back 24 and the bench 26 are slightly concave to partially surround the child's body contour for additional side impact protection. Padding integrated into the seat 26 and the back 24 further enhance impact survivability performance. The shape of the back 24 and the seat 26 may be adjusted with all the automatic buttons 37, 41, 31 located in arm rests or remotely to provide the inclinations to transition between the upward and inclined positions of the safety seat (i.e. forward and rear facing configurations). In addition, head/footrests provide other degrees of inclination independently. Arm-rest that elevate protect form side impacts Inserts that elevate from the upholstery behold the child' s body in place.

The Integrated Infant or Child Safety Car seat has Arm-Rest 23 for Position 1 on both sides of the infant or child, and Arm-Rest 43 for Position 2 on both sides of the infant or child. They are both activated together in Position 1 and 2, for sides protection all along the integrated seat. The height of Arm-Rests 23 and 43 raises to 12.7cm (5 inches), 25.4cm (10 inches) and 38.1cm (15 inches) of elevation (Approx.), and will provide protection and stability to keep the infant or child in the lateral limits of the safety seat, especially in a side impact. The arm-rests in both sides of the seat and the back-rest raise from below electronically to different elevations. (Figure 9). The arm-rests may have orifices to hold bottles on each side. The vertical space at the lower end of the integrated infant or child safety car seat, which is perpendicular to the floor of the car may have an opened or closed compartment for dippers or blankets as well as any other small artifact that might be handy.

In the integrated infant or child safety car seat, the back 24 and seat 26 are seamlessly integrated into the seat 36 so that the contours, upholstery and texture match. The materials may be leather or fabric, following the design of the other seats of the car, with complete integration. This ensures that the safety seat is unified with the structure of the seat 36 both for aesthetics and safety by strengthening the structure together with the car. The Integrated Infant or Child Safety Car Seat could also be separate from the other seats, between or next to them. This is in contrast to the prior art that straps external or independent detached infant car seats onto the rear seat with seatbelts or other available straps and mandatory latches or chassis or bases as well as tethers for the top, that connect to an attachment point.

For all the different adaptable parts that are presented in the Figure drawings of the integrated infant or child safety car seat, in order to satisfy the dimensions of a growing child in various stages, a Three Point Harness 22 and a Three Point Harness 25 provides additional security for the infant or child in any type of accident. This is re-enforced by the Lap-Belts 27. A three point harness 22 and a harness 25 are shown. Other harnesses of the same type which we name with the same numbers are contemplated. Other strapping systems or available types of child restraint systems and methods may be employed as regulated by jurisdiction.

A Camera 35 is provided and directed to the Back 24 where the infant or child is secured into the safety seat. The Camera 35 is also positioned in the head/foot rest 29 and 57 at the extremes of the integrated safety car seat, or other location where it can image the child in the seat. In a forward facing seat, such as seen in Figure 1, the Camera 35 is in the top of the head/foot rest facing the child. There may be multiple Cameras 35 showing different angles or for direct viewing of forward or rear facing seat configurations. The associated displays may show multiple angles or can cycle through the differing perspectives of the cameras. One camera is on or near the rear bench facing forward to image a child in a rear facing configuration. A camera is also on the child seat or on the rear of the front seats pointing back to view the face of a forward facing child.

Cameras are integrated into the hasp (32, 46) of the fastening mechanisms on both ends of them, or buckles, to provide a close up view of the infant strapped therein and also to visually verify that the buckle is latched. The camera should be positioned to view all aspects of the child and seat in any configuration of the seat or for an infant of any age and size.

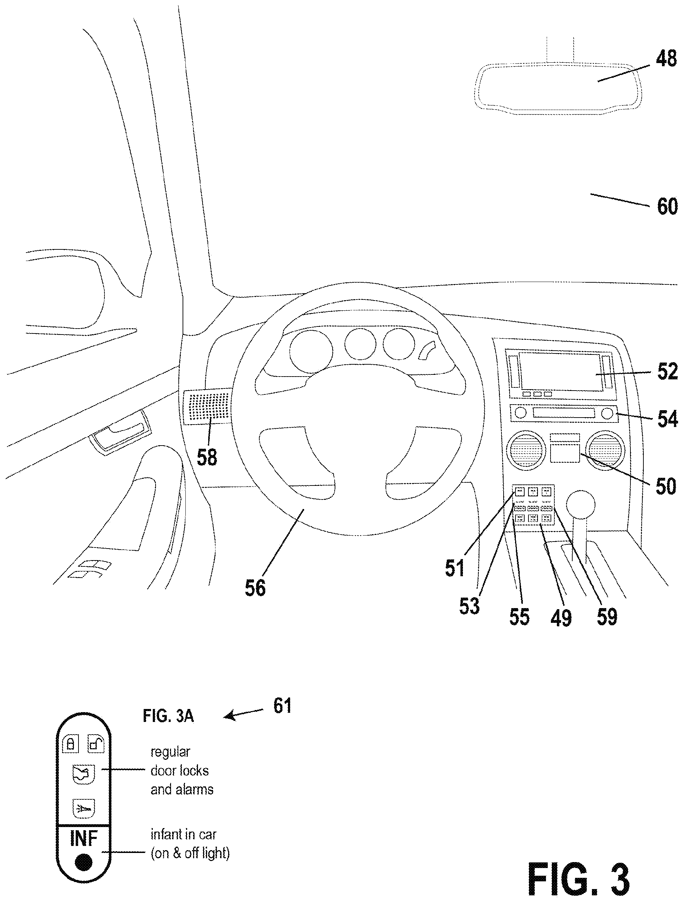

Figure 3. With regards to the safety features of the integrated infant or child safety car seat, they will all together be reflected in the dashboard where a perspective view of an example of a dashboard is shown to include, among other features, a rearview mirror 48, a display 50, a screen 52, a radio 54, a steering wheel 56, a speaker 58 and a windshield 60. All the safety features of the integrated infant or child safety car seat are incorporated with controls and tools accessible to the driver of the vehicle into which the system is installed. All of them are reflected in the dashboard conveniently for the driver to monitor all the elements that comprise the utmost security of the children.

The safety system of the integrated infant or child safety car seat is based on a series of detectors that are intertwined with one another and work together progressively in a sequence. This allows the driver and/or the caregiver to take action when required in every possible status confined to the safety of the infant or child.

These safety features of the Integrated Infant or Child Safety Car Seat, reflected in the dashboard are: Rear-view mirror - placed between the screen and the display. 50 Cameras showed in screen -in hasps and or other surrounding areas. 52
Display of electronic, digital, automatic or other internal signals: 49
Weight of infant or child detected by scale 30 - INFANT IN SEAT. 51.
Buckling Systems - harnesses and hasps BUCKLED 53.
Unbuckle button manually in the display for the driver UNBUCKLE 59.
Alarms and alerts: sounds and lights regular and intermittent. (51, 53, 55).
Manual control: Infant or child left in car button - INFANT IN CAR. 55.
Manual Key device connected to dashboard - INFANT IN CAR. 61.

A rear-view mirror 50 is placed on the dashboard below the screen of the Cameras, as an additional feature to watch the infant or child in the safety seat without requiring the driver to turn around to check on the infant, which could be a distraction and could lead to an accident.

The screen 52 that is part of the dash infotainment or navigation system is used to display the data captured by the all the cameras. The images captured by the cameras are selectively viewable from the front seat. If more than one infant or child is placed in a vehicle that contains more than one integrated infant or child safety car seats, then it will read, Camera 1, Camera 2, Camera 3. Similar to how a back-up camera will show the area behind the vehicle to aid the driver in safely backing up, the display 52 can be used for viewing the interior cameras as needed. When not monitoring the child, the display 52 remains useful for its other traditional functionalities, like the radio and navigation, or the screen can be split to show all these functions mentioned at once.

The scale 30 located internally all along the integrated seat provides data to the processor to aid in determining whether there is a child in the seat 26 or 24 or if the seat 26 or 24 is vacant. For example, infants with clothing may weight from about three kilograms or more. Therefore, the processor and scale 30 combination is set to indicate an occupied seat if about two or more kilograms are detected on the scale 30. This would avoid having an occupied determination if a lighter blanket or some other gear is in the seat 26.

An unfortunately frequent contributor to child safety risk relates to leaving an infant or child un-buckled which refers to not being secured with fastening systems, both of the detached seat itself in the existing car seats in the market that are separate units to place in vehicles, as well as from the buckling system that holds the infant. Infants have been injured when un-buckled to their car seat in the event of the vehicle stopping abruptly, speeding, and vehicle collision and accidents.

Often, infants have died from exposure to excessive heat and cold while alone in a car for protracted periods. An effective aid to avoid such tragedies should be included in all vehicles where an infant is reasonably expected to be. Both situations, of infant left un-buckled and infants left in vehicles, are very common in daily life in which there is an overwhelming number of activities in which a small infant is incorporated to, by travelling in cars, and the drivers have an enormous distraction increased by the excessive use of cell phones when accessing or exiting a car, and even while driving. The present design specifically adapted for use with young or non-verbal infants preferably include automatic safety measures as part of the internal integrated safety system reflected on dashboard to avoid exposure or other injuries that can result from infants un-buckled and infants left in a vehicle.

In an integrated infant or child safety car seat, in addition to the inherent safety of securely strapping the child into the car seat with harnesses 25, and 22 and others, there will be electronic protections included with the system to make sure the fastening of hasps is registered in the controls with sign BUCKLED 53.

This art presents the buckling safety feature as well as all other safety features reflected in the dashboard as features that are internally connected to a seat for children that are part of the car itself, built in when the vehicle is manufactured, not a detached car seat with any other artifacts that are adapted or incorporated as an external feature or device connected in any technological way to an infant car seat that is detached.

In order to cover the situations in which the child is left in vehicle, be it in the integrated infant or child safety seat or elsewhere in the vehicle, in other seats or standing, or in someone's lap and then forgotten, it will be indicated by the control in dashboard INFANT IN CAR 55. A child protection system should include features and functionality that do not distract drivers while operating the vehicle.

Regarding the sign BUCKLED 53 in one embodiment of the invention the hasp 46 as part of the harness 22, and the hasp 32 as part of the harness 25 includes a sensor to detect when the hasp 46 and the hasp 32 or others, are closed thereby likely to have an infant or child strapped in the seat. The sensor sends data to a processor, for a hasp that is open or closed. This will be expressed in the display, as BUCKLED 53, accordingly to the light, illuminated or not, and this sign will also have an intermittent light if the previous button INFANT IN SEAT 51 that responds to the scale determines an infant or child is actually seated and actions of buckling need to be taken in BUCKLED 53.

If the car is on and moving, then the processor can assume that the occupant is buckled in an attended vehicle. Sensors may be attached to the engine control systems, speedometer, transmission or other car data source to determine with a reasonable degree of certainty whether the vehicle is attended or not when stopping or the ignition is turned off and therefore whether the infant is attended to or might be alone, INFANT IN CAR 55.

The cameras 35 in hasps 46, 32, or anywhere in the integrated infant or child safety car seat or elsewhere inside the vehicle may also play a role in the system to prevent unwanted infant left in car situations. All cameras 35, connected to hasps or elsewhere in the integrated infant or child Safety Car seat, or other parts of the vehicle, along with the processor, may detect infant in movement, heat, facial recognition or other sense-able information to provide a reasonable probability that a child occupies the seat 24 or 26. These sensors will be reflected in the screen 52.

Any individual or combination of the scale 30, camera 35 or hasp 32 and 46 sensors may be used to determine whether an infant or child is in the integrated infant or child safety seat. This information along with information from the vehicle indicating whether it is in motion, and therefore necessarily occupied by an infant attendant which could be the driver or a caregiver, is used to make a determination that the infant or child may be at risk of being unattended and at any other risk in the event of an abrupt stop, collision or accident. If a preset combination of parameters is determined to exist then an alert is generated to suggest to a driver or caregiver that the infant or child seat or other areas inside the vehicle where the infant or child examined to determine whether a truly risky situation is taking place.

The alert can be anything to signal to someone who may be able to verify the safety of the infant or child. The processor may be connected electronically to the speakers 58 and radio 54 to produce an audio alert or alarm. The system could broadcast through the speakers a tone, buzzer, noise or pre-recorded statement to the effect of: "check the car seat" or "infant potentially at risk" or a melody such as a lullaby.

The alert can also manifest as a light in the car or headlight, flashing an intermittent light in the display 49 in a particular button or signal, honking the horn, sending a text, disabling the car's ability to lock remotely (key fob) or other notification means alone or in combination with other means and types of alerts.

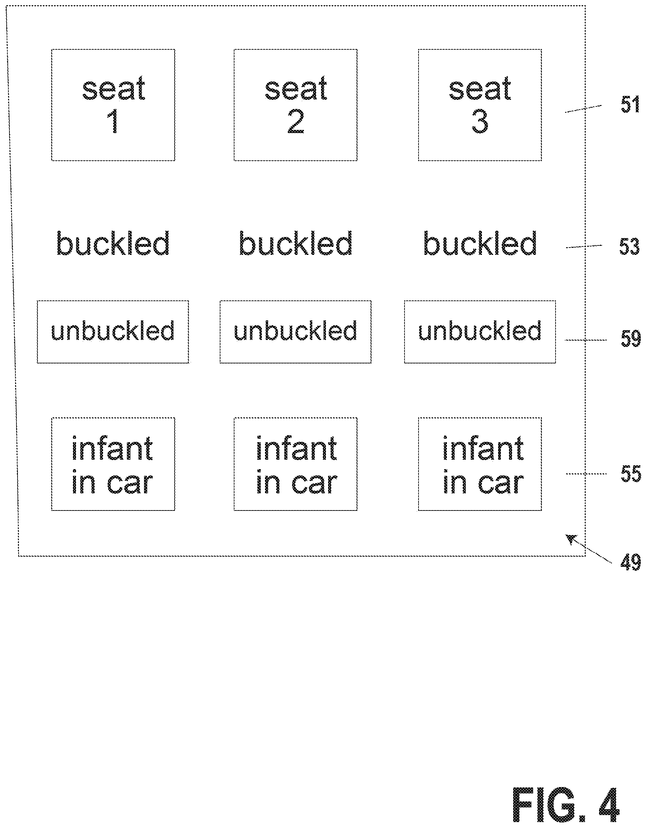

Figure 4 shows by way of example, to indicate the intertwined system of the safety features expressed in the dashboard of the design, this is one of the possible programed actions or the art including all the security elements working together in a sequence, found in the Dashboard Display.

The driver or caregiver places the infant in the Integrated Infant or Child Safety Car Seat. The driver or caregiver must buckle the infant at that moment. (Three point harnesses 22 and 25, and others, complemented by lap belts 27. The driver sits in his driver seat and starts the car. At the same time, the driver presses the button INFANT IN CAR 55 manually. The light of this manually controlled button 55 is illuminated. If the scale 30 determines that the infant is in the seat 26 and/or 24 then the light of the signal INFANT IN SEAT 51 is illuminated. The feature INFANT IN SEAT 51 may also be activated in connection to the Cameras in the SCREEN 52, responding to the images captured by sensors. When the light INFANT IN SEAT 51 is illuminated it internally transmits an indication to the sign BUCKLED 53 to become intermittently illuminated. The light of the second sign BUCKLED 53 should be illuminated, because the driver or caregiver fastened the buckling system. In the case the driver of caregiver did not buckle the infant, then the sign BUCKLED 53 will have an intermittent light, accompanied by the alerting sounds described, such as a lullaby, voices, alarms etc. When the infant is buclded, the sign BUCKLED 53 is illuminated. A lullaby or other sounds are de- activated. The sign INFANT IN SEAT 51 remains lit. When the vehicle is turned off, the sign BUCKLED 53 is intermittently illuminated. A lullaby or other sounds are activated as a reminder to un-buckle the infant. The sign INFANT IN SEAT 51 is illuminated. The INFANT IN CAR 55 is still pressed down with light. When the child is un-buclded, it can be done electronically with a button on the display to be pressed either manually UNBUCKLE 59 which will open the hasps 46 and 32 electronically by an internal mechanism connected to the action of pressing the button in the display, or directly on the buckling system of the seat. By unbuckling either way, the sign BUCKLED 53 is not Intermittent and is not illuminated. The sign INFANT IN SEAT 51 is lit. The sign INFANT IN CAR 55 still remains pressed down with light. The sounds of a lullaby or other are activated as a reminder of INFANT IN SEAT 51 and INFANT IN CAR 55. When the child is removed from the seat by a caregiver, the sign INFANT IN SEAT 51 is not illuminated. The button INFANT IN CAR 55 remains pressed with light. The sound of a lullaby or others are activated as a reminder to take the child out of the vehicle.

When the driver is about to leave his seat, and he is the person that will remove the child from the seat once he is unbuckled electronically or manually, a lullaby or other sounds are a reminder that the infant is in car. INFANT IN SEAT 51 is not illuminated. INFANT IN CAR 55 is intermittent with alarm sound. The driver will have a remote control in his car keys pressing down INFANT IN CAR 55 so the sound of lullaby or others are de-activated and he may lock the vehicle.

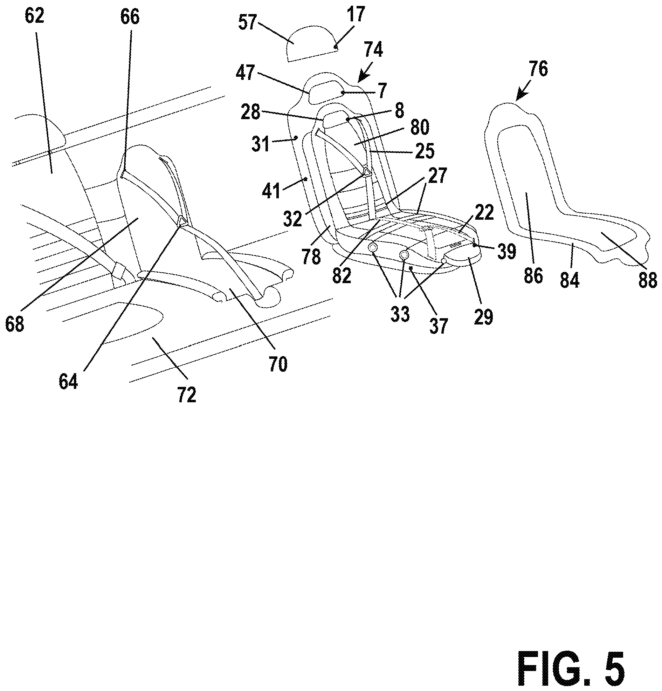

Figure 5 shows some elements that are included in an integrated safety car seat, including a bench 62, a harness 64, an adjuster 66, a back 68, a seat 70, a seat 72, an insert 74, an insert 76, a padding 78, a back 80, a seat 82, a head-rest for newborns 88, a head/foot rest 29, a head/foot rest 28, inclination control button for seat 37, inclination control button for back and back 41, inclination control button 39 for head/foot rest 29, inclination control button 31 for head/foot rest 28, hinge 33, harness 22, hasp 46, harness 25, hasp 32, lap belts 27.

The hinges which we name 33 for all, laterally bisects the child seat to adjust the tilt or recline of the seat. The hinges may be seamless, internal and invisible. The inclinations are smooth and anatomic. By lifting the lower end of the seat 26 with inclination together with headrest 29 the seat becomes rear facing Position 1. For forward facing position 2 lowering the headrest 29 essentially turns that headrest 29 functionally into a footrest. It also bends vertically downward to 90 degrees when not in use, not visible and does not take space when bend down through inclination button. The back 24 terminating in headrest 57 may also have internal hinges to recline as a forward facing position, and headrest 28, 47 and 57 serve as alternative head-rests according to the size of the infant or child. When the head/foot 29 rest is in use in Position 1, it provides the necessary space to accommodate the infant's or child's head and neck, giving enough elongated extension for an occupant to sit comfortably as he grows and his legs and feet extend comfortably to the lower area of back 24, and uses head foot rest 28 as a foot rest, accordingly. With this concave shaped integrated infant safety car seat, the lower section of the back 24 fully inclines with button 41 for a child from 2 to 4 years to extend his lower extremities, in the rear facing position, which allows him to be protected from injuries in a collision for a longer period of time, as recommended by institutions.

The adjusters 66 in various places can move the top point of the harness 64 to accommodate a growing infant or child or with the elevation of inserts 74 or 76 that tend to reposition the child in the seat 70. Other harnesses are provided to fit the child perfectly, to strap the child's shoulders from above or from below the shoulders as recommended by the standards.

With a seat 70 integrated into the form of the bench 62 and seat 72, the seat 26 and back 24 may be below the surface of the surrounding surfaces. Without any padding or inserts this might be dimensioned for a larger child not yet ready to be secured onto a traditional adult seat.

An insert 74 may be used alone on the seat 70 and back 68. It may also be used with insert 76 nested inside insert 74 to further diminish the size inside the safety seat for yet a smaller infant. The inserts 74 and 76 are individually removable to accommodate growing infants so that the safety seat may be used for several years of infants' development through the time when they will be able to use a regular adult harness and seatbelt traditionally in cars and light trucks.

The insert 74 may further include a back 80 and a seat 82 that rest on the back 68 and seat 70, respectively. Padding 78 may be supplied around the periphery of the insert 74 to fill in the space to make it suitable for smaller infants, generally under about two years of age. A head/footrest can also be integrated into the insert 74 at either end for forward or rear facing

configurations. The head/footrests not in use are inserted into the surface of the upholstery of the integrated seat and covered by padding.

The insert 76 may nest inside the insert 74 that is nested inside the back 68 and seat 70 of the car seat bench 62 and seat 72. Optionally, the insert 76 may directly fit onto the seat 70 and back 68 without the intermediate insert 74. A back 86 and seat 88 are surrounded by padding 84 to protect and cushion the child. There are sets of padding for a child zero to 6 months, 6 months to 1 year, 1 year to 2 years, 2 years to 4 years, 4 years to 6 years, 6 years to 8 years, and 8 years and above, all included in one another. The inserts may elevate from the seat as the arm-rests, electronically.

The armrests 23 and 43 surround the periphery of the seat to provide all around protection, they provide the height to protect the child. Similarly, the padding 78 and padding 84 may be placed between the inserts to provide protection in case of an accident. All the cushions, paddings and protectors are from the same fabric or material as the upholstery and belong to the upholstery, detachable or not. They could be leather, or fabric or other material, and always appear like the rests of the car seats following the lines of design.

Figure 6 shows a top and backwards view of the Integrated Infant or Child Safety Car Seat, in which head of infant or child is facing opposite to the driver, between zero and 2 years old, or below mandatory weight, as well as an infant 2 to 4 years old (position 1). The infant's or child's head lays on head/footrest 29. There is a seat 26, back 24, head/footrest 57, a head/footrest 47, head footrest 28, an arm-rest 23, an arm rest 43, a harness 22, a hasp 46, a harness 25, a hasp 32, lap rests 27, and button 39.

Figure 7 shows a top rearward view for newborn infants, from zero to the age of 6 months (Approx.). The newborn infant lays in the seat 26, in Position 1. The infant's head may be in the seat 26, in head footrest 88, or in the head/footrest 29. There is a canopy 67 that covers the area of the extreme of seat 26, and it is attached on the sides of arm-rests 23. The top of the canopy is also attached to the base of the head/footrest 29. The canopy allows the newborn infant to sleep comfortably being sheltered from noise and light. The canopy is made with the same fabric as rest of the upholstery and it could be opened and closed in an accordion shape. It may also be transparent to view the baby through it. It may be detached. The angle of inclination for the newborns upper body is 30 degrees. There is padding and insert for the newborn infant, 74 and 76 to protect and reduce the space that contains him, arm rest 43, harnesses 22 and 25, hasps 46 and 32, lap belts 27. The inserts elevate from the seat with the same technology as the arm-rests, electronically.

Figure 8 of the Integrated safety Seat shows the bench 26 ending with head-foot rest 29, with an example of the different angles of inclination (1, 2, 3, 4, 5) for the angles of (40, 35, 30) degrees upward, for 1, 2, 3, and resting positions 4, 5, for angles of 45 and 90 degrees downward. It shows seat 24, ending with head/foot rest 57, with the different angles of inclination (1, 2, 3, 4) for the angles (45, 40, 60, 80) degrees downward). These angles may vary with the degrees of inclination. They move with buttons in both Positions 1 and 2, to adjust to the needs of the infant's or child's best position to be seated. The buttons raise electronically directly form the seat or by a remote control.

Figure 9 shows the raising elevations of the arm rests 23 and 43, with the buttons 9 and 11, to three different positions on each arm rest that end in approximately to a height of 12 inches. This will protect the infant or child all along the integrated infant or child safety car seat in all the growing phases of his development, especially in side impacts.

The buttons in the seat or a remote control raise the arm rest electronically. They could also be raised and lowered manually.

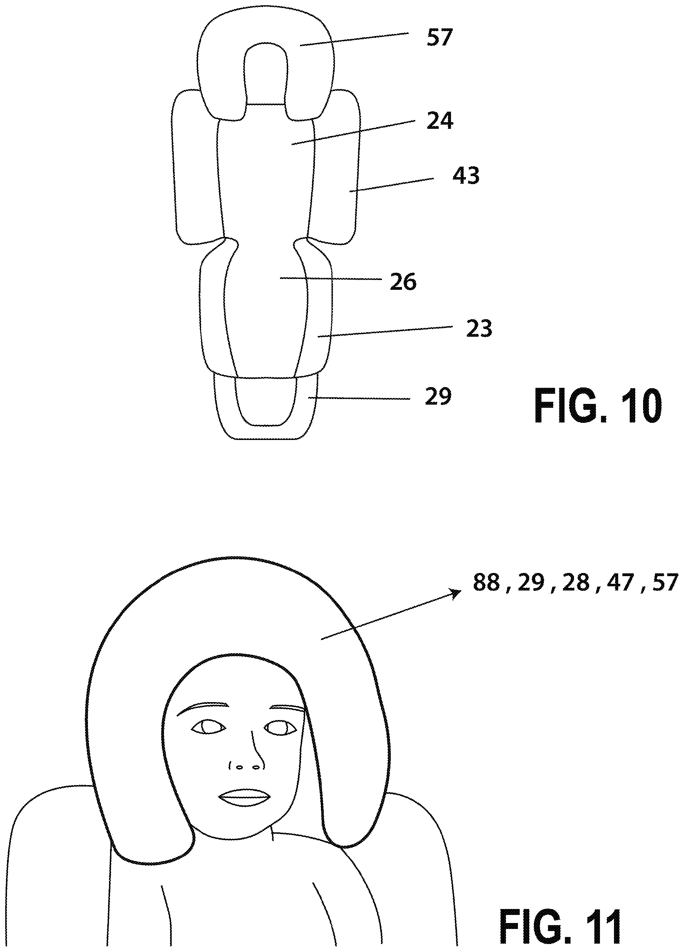

Figure 10 shows the head-foot rest 57, that also applies to head/foot rests 28, 29, 47, and 88 for newborns, with a rounded shape, and a protruding edge of 17.78cm (7 inches) to 25.4cm (10 inches) approximately, with a soft interior texture, that will protect the head and skull of the infant or child, as he develops in every age and size, from any impact.

Figure 11, shows a detail of the protruding edge of head/foot rests 28, 29, 47, 57, and 88 in both Positions 1 and 2 that will protect the infant's or child's head from abrupt movement in impact and accidents.

An important version of the inventive concept can be fairly generally described as an infant or child seat built into a bench seat in a vehicle, or as a separate unit. The bench seat on a right segment has a first seat and a first back sized for normal adults. The first seat and the first back are dimensioned to support an adult. The bench seat on a left segment has a second seat and a second back. The second seat and the second back are dimensioned to support an adult. A medial (center seat) segment of the bench seat has a third seat and a third back. The third seat and third back are dimensioned to support an infant too small for an adult seat. The third seat is permanently integrated with the bench seat between and below the first seat and the second seat. The third back is permanently integrated with the bench seat between and behind the first seat and the second seat. The bench has a first upholstery that matches and smoothly integrates the third seat with the first seat and second seat. The bench has a second upholstery that matched a smoothly integrated the third back with the first back and the second back. Both seat and back are reclined with buttons, as well as head/footrests also reclined with buttons, to rear and forward facing positions, and various degrees. The arm-rest rises from below electronically. The head/footrests are rounded with protruding edges. The head/footrest on the extremes of the seat incline with buttons, with bench and back, or independently. The internal head-foot rests of the seat are inserted into the upholstery and elevate with buttons or manually. All inclinations and elevations could be in remote control. There is a canopy attached to arm rests and head/footrest to protect the newborn baby. There are inserts and padding to cushion and limit the spaces. The inserts elevate from the seat as the arm-rests, electronically. A camera is directed to the third back to view the infant (s) seated there. With the concave shaped Integrated safety car seat, the lower section of the back 24 fully inclines for a child from 2 to 4 years to extend his lower extremities, in the rear facing position. A screen is positioned visible to a forward facing driver of the vehicle. The screen selectively shows an image from the camera(s). The seat includes an internal scale. Harnesses with hasps are provided to secure an occupant of the seat. The hasp includes a sensor to determine whether the hasp is closed. A processor is connected to a sensor that determines whether the vehicle is in operation based on any of: a speedometer, a transmission or an engine computer. If the processor determines that the vehicle is not in operation and the scale indicates to the processor a preselected threshold weight and the hasp sensor indicates closed then an alert is made. A display is positioned visibly to a forward facing driver of the vehicle. The display shows the signals of the scale, the hasps and the vehicle in operation, as well as a reminder that an infant or child is in the car, and an unbuckling electronic remote button is an internal feature of the built in car seat. Inserts and paddings are provided that are adapted to fit within the back and seat to reduce the available size of the back and seat to fit children as they grow. Optionally, the alert is any individual or combination of: a light, a display, a sound, disabling of a vehicle system or a wireless message.

A version of the invention can be fairly described as an integrated infant or child safety car seat built into a bench seat in a vehicle, or as a separate unit between or next to the other seats. A seat in all the positions has inclinations on both lower and upper parts of the seat and back, in different positions and angles for different ages and sizes with a control button. Head/footrest on each extreme of the integrated safety seat are an extension of the seat, therefore providing more space for infant that inclines to different angles by a control button. Internal head/footrests raise from the upholstery. The arm-rests raise from below electronically. Inserts elevate from the upholstery electronically. A remote control for all inclination and raising and elevating features. The head/footrests are rounded with protruding protection. A canopy for the newborn infants. With concave shaped seat, the lower section of the back-rest fully inclines for a child from 2 to 4 years to extend his lower extremities, in the rear facing position. A camera is directed to the third back and another set of cameras are in hasps of harnesses elsewhere. A screen is positioned visible to a forward facing driver of the vehicle. A display with inner and also manual signs is positioned that is visible to a forward facing driver. The screen selectively shows an image from the cameras. The seat includes a scale on seat and back as an internal part of the integrated safety car seat that is part of the vehicle. The harnesses with hasps are provided to secure an occupant of the seat. The hasps include sensors to determine whether the hasps are closed. A processor is connected to the sensors that determine whether the vehicle is in operation based on any of: a speedometer, a transmission or an engine computer. If the processor determines that the vehicle is not in operation and the scale indicates to the processor a preselected threshold weight and the hasp sensor indicates closed, then an alert is made. A processor indicates if an occupant is in the car connected to the safety seat. A processor indicates if an occupant is in the safety seat, connected to the safety seat. A processor indicates if an infant or child is buckled connected to the integrated infant or child safety car seat. A processor activates lights, sounds and alarms connected to integrated safety car seat. A processor Unbuckled the hasps remotely and internally form display, connected internally to integrated infant or child safety car seat. A processor is installed in key device for Infant or child in car, connected to the integrated infant or child safety car seat connected internally. The integrated infant or child safety car seat has adaptable positions facing the driver and opposite to the driver, with inclinations of bench and back-rest rest as well as head/footrests in the extremes that also independently incline to different angles, and head/foot rests internally that elevate from upholstery, as arm rests all along the seat that raise, as well as inserts that elevate. The integrated infant or child safety car seat further has inserts and padding provided that are adapted to fit within the back and seat to reduce the available sizes of the back and seat to fit a smaller infant. Optionally, the alert is any individual or combination of: a light or an intermittent light in display, a sound, disabling of a vehicle system or a wireless message internally connected to the integrated safety car seat. The inserts may elevate from the seat as the arm-rests, electronically. The seat and back are provided with a mechanized recline to convert the seat from forward facing to rear facing. Optionally, head/foot rests have independent angles of inclination. The arm-rests raise from below electronically on both seat and back.

Another version of the device embodied in its inventive concepts may be fairly described as an integrated infant or child safety car seat built into a bench seat in a vehicle, or as a separate unit between the seats. A segment of the bench seat has a built in assembled seat and a back.

The seat and back are dimensioned to support an infant or child, from a newborn to a toddler or the age of 8 who is too small for an adult seat. With concave shaped Integrated Infant or Child Safety Car Seat the lower section of the back fully inclines for a child from 2 to 4 years to extend his lower extremities, in the rear facing position. A camera is directed to the back. Other cameras are in hasps and elsewhere in integrated seat and vehicle. A screen is positioned visible to a forward facing driver of the vehicle. The screen selectively shows an image from the cameras. A display is positioned visible to a forward facing driver of the vehicle. The display has electronic and manual control signals.

A display is positioned visible to a forward facing driver of the vehicle; all the safety features are reflected in display. The integrated infant or child safety car seat includes an internal scale. Harnesses with hasps are provided to secure an infant or child in the seat, internally connected to the integrated infant safety car seat. The hasps include a sensor to determine whether the hasp is closed; a processor is connected to a sensor that determines whether the vehicle is in operation based on any of: a speedometer, a transmission or an engine computer. If the processor determines that the vehicle is not in operation and the scale indicates to the processor a preselected threshold weight and the hasp sensor indicates closed then an alert is made. Electronic signs of infant in seat, and infant buckled are reflected in display, which are internally connected to the integrated infant or child safety car seat. Manual sign of INFANT in Car, is reflected in display, internally connected to the integrated safety car seat. Electronic button to unbuckle, is reflected in display, internally connected to the safety car seat. Electronic control of INFANT in Car in key device is internally connected to Integrated infant or child Safety Car Seat. Lights, intermittent lights, sounds such as a lullaby and other sound or voices and alerts are activated and de-activated according to status of the infant or child in the vehicle, the actions taken, and the control signs, internally connected to the safety car seat. Inserts and paddings are provided that is adapted to fit within the back and seat to reduce the available size of the back and seat to fit a smaller infant. The inserts elevate from the seat as the arm-rests, electronically. Optionally, the alert is any individual or combination of: a light, a display, a sound, disabling of a vehicle system or a wireless message. Optionally, the vehicle includes more than one integrated infant or child safety car seat. The seat and back are provided with a mechanized recline to convert the seat from forward facing to rear facing with different degrees of inclination, with rounded and protruding edges head/foot rests that also recline in different angles, and arm-rests that elevate the seat and back- to different heights, and head/foot rests in the extremes that may recline independently, and head/foot rests along the seat and back that elevate from the upholstery.

The foregoing description conveys the best understanding of the objectives and advantages of the present invention. Different embodiments may be made of the inventive concept of this invention. It is to be understood that all matter disclosed herein is to be interpreted merely as illustrative, and not in a limiting sense.

### VII. INDUSTRIAL APPLICABILITY

It is evident that an invention such as the integrated infant or child safety seat can increase the safety factor and likelihood of survival in automobile collisions. The present invention satisfies this goal and is expected to be preferred standard equipment on luxury large vehicles as well as more commonly available vehicles. Further, the improved aesthetic of a design integrated with the upholstery not only improves the appearance of a vehicle, it lends strength to securely connecting a child occupant to the vehicle, increasing safety.

Prior art required children that travel in cars to use detached car seats of all shapes and forms. Infants who don't fit properly in a traditional car seat in a rear-facing position or as they start growing are not seated adequately and their lower extremities are impeded to extend.

Toddlers or small children are placed in a detached car seat in the forward facing position before it is indicated are at risk of an injury to their skull and neck and are at increased risk of death in the event of an accident.

The present invention contemplates all of these factors and holds the young travelers in a natural, safe and protected fashion. Presently discussed is a better way of ensuring the children in cars, in a comprehensive seat optimally designed recognizing the needs of the young travelers while protecting their lives.

The Integrated Infant or Child Safety Car Seat is an invention and a product development that withholds all the technology advancements combined in a unique concept and art, surpassing all existing alternatives. Consumers, car manufacturers and Institutions are more demanding.

Studies from around the world indicate it is imperative to place the child in a seat in a rear facing position, for as long as possible, for the mandatory age of 2, and preferably until the age of 4 years old, to avoid injuries and deaths in car collisions or accidents. As the infant starts getting closer to being one year old, the rear facing position becomes a struggle. Space available for them to stretch their legs, becomes limited. The present design solves these issues. It also avoids complicated, risky and unsafe use of detached car seat units with the complimentary separate pieces.

## Claims

1. An integrated infant or child safety vehicle seat built into a vehicle, in a bench in a vehicle; or as a separate unit between or next to other seats in a vehicle;
the integrated infant or child safety vehicle seat including:
a seat (26) and a back (24) dimensioned to support an occupant;
**characterized in that**;
the integrated infant or child safety vehicle seat is arranged to incline to a rear facing position and a forward facing position at different angles for an infant or child of different ages and sizes with a control button;
a head rest (57) and a foot rest (29) are provided in the rear facing and forward facing positions and are rounded with a protruding protection on each end of the integrated infant or child safety vehicle seat and are extensions of the same;
an arm-rest is provided on sides on both the seat (26) and the back (24) that raises from below electronically;
the integrated infant or child safety vehicle seat is concave shaped, with a lower section of the back (24) fully inclinable for a child aged from 2 to 4 years for extension of the child's lower extremities, in the rear facing position;
a canopy (67) is provided over the integrated infant or child safety vehicle seat to protect an occupant;
a harness (22, 25) with a hasp (32, 46) in the rear facing and forward facing positions is provided to secure an occupant in the integrated infant or child safety vehicle seat;
a first camera (35) is provided and directed to a back of the integrated infant or child safety vehicle seat;
a second camera (25) is provided in the hasp (32, 46);
a display (49) is provided and is positioned to be visible to a forward facing driver of the vehicle, the display provided with manual signs and is arranged to allow an image from the first and/or second cameras (35, 25) to be shown in use;
the integrated infant or child safety vehicle seat including an internal scale (30);
a processor is provided and is arranged to determine and send to the display an indication if an infant or child is in the integrated infant or child safety vehicle seat;
the processor determines and sends to the display an indication if the infant or child is buckled in the integrated infant or child safety vehicle seat;
the processor is wirelessly connected to a key fob (61) to play an alert (51, 53, 55);
the seat (26) and back (24) is provided with a recline mechanism to convert the integrated infant or child safety vehicle seat between the forward facing and rear facing positions so that an infant or child in the integrated infant or child vehicle safety seat can face the driver and face opposite to the driver respectively ;
the seat (26), the back (24), the head rest (57) and foot rest (29) are arranged to independently incline to different angles;
arm-rests (37, 43) are provided and raise from below electronically on the integrated infant or child safety vehicle seat ;
inserts (74, 76) are provided that raise using the same technology as the arm rests (37, 43).

2. The integrated infant or child safety vehicle seat of claim 1, wherein the integrated infant or child safety vehicle seat is built into a bench (36) locatable in a vehicle, the bench (36) including a back (12) and a seat (14) and the integrated infant or child safety vehicle seat can be adapted to be positioned in the center, a left segment and/or a right segment of the bench.

3. The integrated infant or child safety vehicle seat of claim 2, wherein the bench (36) includes:
a right segment with a first seat (14) and a first back (12);
the first seat (14) and the first back (12) dimensioned to support an adult;
the bench (36) having a left segment with a second seat (14) and a second back (12);
the second seat (14) and the second back (12) dimensioned to support an adult;
a medial segment of the bench (36) including the seat (26) and the back (24);
the seat (26) is permanently integrated with the bench (36) between and below the first seat (14) and the second seat (14);
the back (24) is permanently integrated with the bench (36) between and behind the first back (12) and the second back (12);
the bench (36) has a first upholstery that matches and seamlessly integrates the seat (26) with the first seat (14) and the second seat (14);
the bench (36) has a second upholstery that matches and seamlessly integrates the back (24) with the first back (12) and the second back (12).

4. The integrated infant or child safety vehicle seat in claim 1, wherein the inserts (74, 76) and paddings (78) are adapted to fit within the back (24) and the seat (26) to reduce the available size of the back (24) and the seat (26) to fit smaller infants or children.

5. The integrated infant or child safety vehicle seat in claim 1, wherein the alert is any individual or combination of: a light, an intermittent light in the display (49), a sound, disabling of a vehicle system or a wireless message internally connected to the integrated infant or child safety vehicle seat.

6. The integrated infant or child safety vehicle seat of claim 1, wherein
the hasp (32, 46) include a sensor to determine whether the hasp (32, 46) is closed;
the processor is connected to the sensor that determines whether the vehicle is in operation based on any of: a speedometer, a transmission or an engine computer; if the processor determines that the vehicle is not in operation and the scale indicates to the processor a preselected threshold weight and the hasp sensor indicates closed then the alert is made;
the processor activates or deactivates one or more lights, intermittent lights, sounds, lullaby voices and/or the alerts (51, 53, 55) according to status of the infant or child in the integrated safety vehicle seat, the actions taken, and the control signs, internally connected to the integrated infant or child safety vehicle seat.

7. The integrated infant or child safety vehicle seat in claim 6 further **characterized in that** the alert is any individual or combination of: a light, a display, a sound, disabling of a vehicle system or a wireless message.

8. The integrated infant or child safety vehicle seat in claim 1 further **characterized in that** the vehicle includes more than one integrated infant or child safety vehicle seat.

## Patentansprüche

1. Integrierter Säuglings- oder Kindersicherheitsfahrzeugsitz, der in ein Fahrzeug eingebaut ist, in eine Bank in einem Fahrzeug; oder als eine separate Einheit zwischen oder neben anderen Sitzen in einem Fahrzeug;
wobei der integrierte Säuglings- oder Kindersicherheitsfahrzeugsitz aufweist:
einen Sitz (26) und eine Rückenlehne (24), die zum Stützen eines Insassen dimensioniert sind;
**dadurch gekennzeichnet, dass**:
der integrierte Säuglings- oder Kindersicherheitsfahrzeugsitz angeordnet ist, um sich mit einem Bedienknopf in verschiedenen Winkeln für einen Säugling oder ein Kind unterschiedlichen Alters und unterschiedlicher Größe in eine nach hinten gerichtete Stellung und eine nach vorn gerichtete Stellung neigen zu lassen;
eine Kopfstütze (57) und eine Fußauflage (29) in der nach hinten gerichteten Stellung und der nach vorn gerichteten Stellung bereitgestellt sind und gerundet sind mit einem vorstehenden Schutz an jedem Ende des integrierten Säuglings- oder Kindersicherheitsfahrzeugsitzes und Verlängerungen derselben sind;
eine Armlehne an Seiten sowohl des Sitzes (26) als auch der Rückenlehne (24) bereitgestellt ist, die elektronisch von unten hochgefahren wird;
der integrierte Säuglings- oder Kindersicherheitsfahrzeugsitz konkav geformt ist, wobei ein unterer Abschnitt der Rückenlehne (24) für ein Kind im Alter von 2 bis 4 Jahren zum Ausstrecken der unteren Extremitäten in der nach hinten gerichteten Stellung vollständig neigbar ist;
ein Dach (67) über dem integrierten Säuglings- oder Kindersicherheitsfahrzeugsitz zum Schutz eines Insassen bereitgestellt ist;
ein Gurtsystem (22, 25) mit einem Schloss (32, 46) in der nach hinten gerichteten und der nach vorn gerichteten Stellung bereitgestellt ist, um einen Insassen in dem integrierten Säuglings- oder Kindersicherheitsfahrzeugsitz zu sichern;
eine erste Kamera (35) bereitgestellt und auf eine Rückenlehne des integrierten Säuglings- oder Kindersicherheitsfahrzeugsitzes gerichtet ist;
eine zweite Kamera (25) in dem Schloss (32, 46) bereitgestellt ist;
eine Anzeige (49) bereitgestellt ist und so positioniert ist, dass sie für einen nach vom blickenden Fahrer des Fahrzeugs sichtbar ist, wobei die Anzeige mit manuellen Zeichen versehen ist und angeordnet ist, damit im Gebrauch ein Bild von der ersten und/oder zweiten Kamera (35, 25) gezeigt werden kann;
der integrierte Säuglings- oder Kindersicherheitsfahrzeugsitz eine innere Waage (30) beinhaltet;
ein Prozessor bereitgestellt ist und zum Bestimmen und Senden eines Hinweises an die Anzeige, wenn sich ein Säugling oder Kind in dem integrierten Säuglings- oder Kindersicherheitsfahrzeugsitz befindet, angeordnet ist;
der Prozessor einen Hinweis bestimmt und an die Anzeige sendet, wenn der Säugling oder das Kind in dem Kindersicherheitsfahrzeugsitz angeschnallt ist;
der Prozessor drahtlos mit einem Schlüsselanhänger (61) verbunden ist, um eine Warnung (51, 53, 55) abzuspielen;
der Sitz (26) und die Rückenlehne (24) mit einem Neigungsmechanismus versehen ist, um den integrierten Säuglings- oder Kindersicherheitsfahrzeugsitz zwischen der nach vom gerichteten und der nach hinten gerichteten Stellung umzustellen, so dass ein Säugling oder Kind in dem integrierten Säuglings- oder Kindersicherheitsfahrzeugsitz dem Fahrer zugewandt bzw. vom Fahrer abgewandt sein kann;
der Sitz (26), die Rückenlehne (24), die Kopfstütze (57) und die Fußauflage (29) angeordnet sind, um unabhängig voneinander in verschiedenen Winkeln geneigt zu werden;
Armlehnen (37, 43) bereitgestellt sind und an dem integrierten Säuglings- oder Kindersicherheitsfahrzeugsitz elektronisch von unten hochgefahren werden;
Einsätze (74, 76) bereitgestellt sind, die unter Verwendung derselben Technologie wie die Armlehnen (37, 43) hochgefahren werden.

2. Integrierter Säuglings- oder Kindersicherheitsfahrzeugsitz nach Anspruch 1, wobei der integrierte Säuglings- oder Kindersicherheitsfahrzeugsitz in eine Bank (36) eingebaut ist, die in einem Fahrzeug positionierbar ist, wobei die Bank (36) eine Rückenlehne (12) und einen Sitz (14) aufweist und der integrierte Säuglings- oder Kindersicherheitsfahrzeugsitz zur Positionierung in der Mitte, einem linken Segment und/oder einem rechten Segment der Bank eingestellt werden kann.

3. Integrierter Säuglings- oder Kindersicherheitsfahrzeugsitz nach Anspruch 2, wobei die Bank (36) aufweist:
ein rechtes Segment mit einem ersten Sitz (14) und einer ersten Rückenlehne (12);
den ersten Sitz (14) und die erste Rückenlehne (12), die zum Tragen eines Erwachsenen dimensioniert sind;
die Bank (36) mit einem linken Segment mit einem zweiten Sitz (14) und einer zweiten Rückenlehne (12);
den zweiten Sitz (14) und die zweite Rückenlehne (12), die zum Tragen eines Erwachsenen dimensioniert sind;
ein mediales Segment der Bank (36), das den Sitz (26) und die Rückenlehne (24) aufweist;
der Sitz (26) zwischen und unter dem ersten Sitz (14) und dem zweiten Sitz (14) permanent in die Bank (36) integriert ist;
die Rückenlehne (24) zwischen und hinter der ersten Rückenlehne (12) und der zweiten Rückenlehne (12) permanent in die Bank (36) integriert ist;
die Bank (36) eine erste Polsterung hat, die mit dem Sitz (26) übereinstimmt und ihn nahtlos in den ersten Sitz (14) und den zweiten Sitz (14) integriert;
die Bank (36) eine zweite Polsterung hat, die mit der Rückenlehne (24) übereinstimmt und sie nahtlos in die erste Rückenlehne (12) und die zweite Rückenlehne (12) integriert.

4. Integrierter Säuglings- oder Kindersicherheitsfahrzeugsitz nach Anspruch 1, wobei die Einsätze (74, 76) und die Polster (78) dafür ausgelegt sind, in die Rückenlehne (24) und den Sitz (26) zu passen, um die verfügbare Größe der Rückenlehne (24) und des Sitzes (26) passend für kleinere Säuglinge oder Kinder zu verkleinern.

5. Integrierter Säuglings- oder Kindersicherheitsfahrzeugsitz nach Anspruch 1, wobei der Alarm ein Einzelnes oder eine Kombination ist von: einer Leuchte, einer Blinkleuchte in der Anzeige (49) einem Ton, Deaktivieren eines Fahrzeugsystems oder einer drahtlosen Nachricht, die intern mit dem integrierten Säuglings- oder Kindersicherheitsfahrzeugsitz verbunden ist.

6. Integrierter Säuglings- oder Kindersicherheitsfahrzeugsitz nach Anspruch 1, wobei
das Gurtschloss (32, 46) einen Sensor zum Bestimmen, ob das Gurtschloss (32, 46) geschlossen ist, aufweist;
der Prozessor mit dem Sensor verbunden ist, der auf Basis von beliebigen der Folgenden bestimmt, ob das Fahrzeug in Betrieb ist: einem Tachometer, einem Getriebe oder einem Motorcomputer; wenn der Prozessor bestimmt, dass das Fahrzeug nicht in Betrieb ist, und die Waage dem Prozessor ein vorausgewähltes Schwellengewicht angibt und der Sensor des Gurtschlosses angibt, dass es geschlossen ist, dann wird der Alarm getätigt;
der Prozessor eine(n) oder mehrere Leuchten, Blinkleuchten, Töne, Wiegenliedstimmen und/oder die Warnungen (51, 52, 53) gemäß dem Status des Säuglings oder Kinds in dem integrierten Sicherheitsfahrzeugsitz, die ergriffenen Maßnahmen und die Bedienzeichen, die intern mit dem integrierten Säuglings- oder Kindersicherheitsfahrzeugsitz verbunden sind, aktiviert oder deaktiviert.

7. Integrierter Säuglings- oder Kindersicherheitsfahrzeugsitz nach Anspruch 6, ferner **dadurch gekennzeichnet, dass** der Alarm ein einzelnes oder eine Kombination ist von: einer Leuchte, einer Anzeige, einem Ton, Deaktivieren eines Fahrzeugsystems oder einer drahtlosen Nachricht.

8. Integrierter Säuglings- oder Kindersicherheitsfahrzeugsitz nach Anspruch 1, ferner **dadurch gekennzeichnet, dass** das Fahrzeug mehr als einen integrierten Säuglings- oder Kindersicherheitsfahrzeugsitz aufweist.

## Revendications

1. Siège de sécurité de véhicule pour bébé ou enfant intégré construit dans un véhicule, dans un banc dans un véhicule ; ou en tant qu'unité séparée entre ou de manière contiguë à d'autres sièges dans un véhicule ;
le siège de sécurité de véhicule pour bébé ou enfant intégré incluant :
un siège (26) et un dossier (24) dimensionnés pour soutenir un occupant ;
**caractérisé en ce que** ;
le siège de sécurité de véhicule pour bébé ou enfant intégré est agencé pour s'incliner vers une position faisant face à l'arrière et une position faisant face à l'avant à différents angles pour un bébé ou un enfant d'âges et de tailles différents/es à l'aide d'un bouton de commande ;
un appui-tête (57) et un repose-pieds (29) sont prévus dans les positions faisant face à l'arrière et à l'avant et sont arrondis avec une protection saillante sur chaque extrémité du siège de sécurité de véhicule pour bébé ou enfant intégré et sont des extensions de celui-ci ;
un accoudoir est prévu sur les côtés sur à la fois le siège (26) et le dossier (24) qui se relève électroniquement à partir du bas ;
le siège de sécurité de véhicule pour bébé ou enfant intégré a une forme concave, avec une section inférieure du dossier (24) qui est entièrement inclinable pour un enfant âgé de 2 à 4 ans pour une extension des extrémités inférieures de l'enfant, dans la position faisant face à l'arrière ;
une housse d'auvent (67) est prévue par-dessus le siège de sécurité de véhicule pour bébé ou enfant intégré afin de protéger un occupant ;
un harnais (22, 25) avec un fermoir (32, 46) dans les positions faisant face à l'arrière et à l'avant est prévu pour maintenir un occupant dans le siège de sécurité de véhicule pour bébé ou enfant intégré ;
une première caméra (35) est prévue et dirigée vers une face arrière du siège de sécurité de véhicule pour bébé ou enfant intégré ;
une deuxième caméra (25) est prévue dans le fermoir (32, 46) ;
un affichage (49) est prévu et est positionné pour être visible par un conducteur faisant face à l'avant du véhicule, l'affichage étant fourni avec des signes manuels et étant agencé pour permettre à une image provenant des première et/ou deuxième caméras (35, 25) d'être visualisée en utilisation ;
le siège de sécurité de véhicule pour bébé ou enfant intégré incluant une balance interne (30) ;
un processeur est prévu et est agencé pour déterminer et envoyer à l'affichage une indication pour savoir si un bébé ou un enfant se trouve dans le siège de sécurité de véhicule pour bébé ou enfant intégré ;
le processeur détermine et envoie à l'affichage une indication pour savoir si le bébé ou l'enfant est attaché dans le siège de sécurité de véhicule pour bébé ou enfant intégré ;
le processeur est connecté sans fil à un boîtier de télécommande (61) pour signaler une alerte (51, 53, 55) ;
le siège (26) et le dossier (24) sont munis d'un mécanisme d'inclinaison pour convertir le siège de sécurité de véhicule pour bébé ou enfant intégré entre les positions faisant face à l'avant et faisant face à l'arrière de sorte qu'un bébé ou un enfant dans le siège de sécurité de véhicule pour bébé ou enfant intégré peut faire face au conducteur et faire face à l'opposé du conducteur respectivement ;
le siège (26), le dossier (24), l'appui-tête (57) et le repose-pieds (29) sont agencés pour une inclinaison indépendante à différents angles ;
des accoudoirs (37, 43) sont prévus et se relèvent électroniquement à partir du bas sur le siège de sécurité de véhicule pour bébé ou enfant intégré ;
des inserts (74, 76) sont prévus qui se relèvent grâce à l'utilisation de la même technologie que les accoudoirs (37, 43).

2. Siège de sécurité de véhicule pour bébé ou enfant intégré de la revendication 1, le siège de sécurité de véhicule pour bébé ou enfant intégré étant construit dans un banc (36) localisable dans un véhicule, le banc (36) incluant un dossier (12) et un siège (14) et le siège de sécurité de véhicule pour bébé ou enfant intégré pouvant être adapté pour être positionné dans le centre, un segment gauche et/ou un segment droit du banc.

3. Siège de sécurité de véhicule pour bébé ou enfant intégré de la revendication 2, dans lequel le banc (36) inclut :
un segment droit avec un premier siège (14) et un premier dossier (12) ;
le premier siège (14) et le premier dossier (12) étant dimensionnés pour soutenir un adulte ;
le banc (36) ayant un segment gauche avec un deuxième siège (14) et un deuxième dossier (12) ;
le deuxième siège (14) et le deuxième dossier (12) étant dimensionnés pour soutenir un adulte ;
un segment médian du banc (36) incluant le siège (26) et le dossier (24) ;
le siège (26) est intégré de manière permanente avec le banc (36) entre et en dessous du premier siège (14) et du deuxième siège (14) ;
le dossier (24) est intégré de manière permanente avec le banc (36) entre et derrière le premier dossier (12) et le deuxième dossier (12) ;
le banc (36) a un premier revêtement qui est assorti à et s'intègre de manière harmonieuse au siège (26) avec le premier siège (14) et le deuxième siège (14) ;
le banc (36) a un deuxième revêtement qui est assorti à et s'intègre de manière harmonieuse au dossier (24) avec le premier dossier (12) et le deuxième dossier (12).

4. Siège de sécurité de véhicule pour bébé ou enfant intégré dans la revendication 1, dans lequel les inserts (74, 76) et les rembourrages (78) sont conçus pour s'adapter à l'intérieur du dossier (24) et du siège (26) afin de réduire la taille disponible du dossier (24) et du siège (26) pour convenir à des bébés ou enfants plus petits.

5. Siège de sécurité de véhicule pour bébé ou enfant intégré dans la revendication 1, dans lequel l'alerte est n'importe quel élément individuel ou une combinaison d'éléments parmi : une lumière, une lumière intermittente dans l'affichage (49), un son, la désactivation d'un système de véhicule ou un message sans fil connecté de manière interne au siège de sécurité de véhicule pour bébé ou enfant intégré.

6. Siège de sécurité de véhicule pour bébé ou enfant intégré de la revendication 1, dans lequel
le fermoir (32, 46) inclut un capteur pour déterminer si le fermoir (32, 46) est fermé ;
le processeur est connecté au capteur qui détermine si le véhicule est en fonctionnement sur la base d'un élément quelconque parmi : un compteur de vitesse, un ordinateur de transmission ou de moteur ; si le processeur détermine que le véhicule n'est pas en fonctionnement et que la bascule indique au processeur un poids seuil présélectionné et que le capteur de fermoir indique fermé, alors l'alerte est lancée ;
le processeur active ou désactive un/e ou plusieurs lumières, lumières intermittentes, sons, voix de berceuse et/ou les alertes (51, 53, 55) en fonction du statut du bébé ou de l'enfant dans le siège de sécurité de véhicule intégré, les actions prises, et les signes de commande, connectés/ées de manière interne au siège de sécurité de véhicule pour bébé ou enfant intégré.

7. Siège de sécurité de véhicule pour bébé ou enfant intégré dans la revendication 6 **caractérisé en outre en ce que** l'alerte est n'importe quel élément individuel ou une combinaison d'éléments parmi : une lumière, un affichage, un son, la désactivation d'un système de véhicule ou un message sans fil.

8. Siège de sécurité de véhicule pour bébé ou enfant intégré dans la revendication 1 **caractérisé en outre en ce que** le véhicule inclut plus d'un siège de sécurité de véhicule pour bébé ou enfant intégré.
